# EUROPEAN PATENT APPLICATION

(11) **EP 0 810 317 A1**
(43) Date of publication of application: **03.12.1997**
(21) Application number: 97303713.8
(22) Date of filing: 30.05.1997
(51) Int. Cl.: D06F 37/22

(54) **Washing machine**

(30) Priority: 30.05.1996 KR 9613845; 30.05.1996 KR 9613855
(71) Applicant: Samsung Electronics Co., Ltd., Suwon-City, Kyungki-do 441-742 (KR)
(72) Inventor: Kim, Jin-Soo, Suwon City, Kyungki-Do (KR)
(74) Representative: Read, Matthew Charles

(57) **Abstract**

A method of manufacturing a balancing device for a rotatably mounted drum (30) of a washing machine is disclosed and includes the steps of providing an annular channel (51a,51b) fixed relative to the drum (30) concentric therewith, and placing a plurality of freely movable counterweights (52a,52b) in contact with an inner surface of each channel (51a,51b). The method includes the step of smoothing the inner surface to reduce the roughness thereof. A washing machine including a rotatably mounted drum (30) for receiving a load of laundry is also disclosed. It includes counterbalance means (52a,52b) arranged to move during rotation of the drum (30) in an inner and outer channel (51a,51b) fixed relative to the drum (30) concentric therewith, towards a counterbalancing position in response to an imbalance in a load in the drum (30). The inner and outer channels (51a,51b) contain liquids of different viscosities.

## Description

The present invention relates to a method of manufacturing a balancing device for a rotatably mounted drum of a washing machine, including the steps of providing an annular channel fixed relative to the drum concentric therewith, and placing a plurality of freely movable counterweights in contact with an inner surface of the channel.

The present invention also relates to a washing machine including a rotatably mounted drum for receiving a load of laundry and counterbalance means arranged to move, during rotation of the drum in an inner and outer annular channel fixed relative to the drum concentric therewith, towards a counterbalancing position in response to an imbalance in a load in the drum.

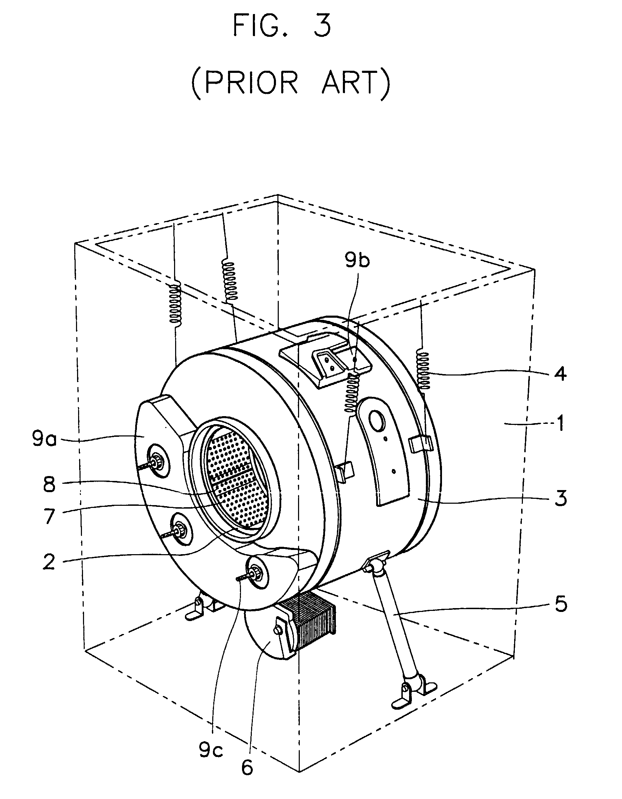

A conventional drum washing machine is illustrated in Figure 3 and is an appliance in which clothes are washed using suds generated as a result of rotation of its drum-type spin basket. Washing, rinsing and spin drying tasks are carried out automatically in response to a predetermined program. After the clothes have been washed and rinsed, centrifugal force is used to remove excess water by rotating the spin basket at high speeds in a spin drying cycle. Uneven distribution of clothes in the spin basket during this step can cause abnormal vibrations and noise and so a balancing device is required for the smooth operation of the appliance.

Referring to Figure 3, the conventional drum washing machine includes a housing 1 containing a tub 2 suspended by suspension springs 4a and shock-absorbing members 4b. A spin basket 3 is mounted for rotation within the tub 2 by an electric motor 5 mounted on the bottom of the housing 1 and includes a plurality of small holes 3a uniformly formed on its cylindrical surface, and a plurality of lifters 3b extending radially inwardly towards the axis of rotation of the spin basket.

Water drains from the spin basket 3 into the tub 2 through the small holes 3a, and the lifters 3b agitate the laundry and enhance the creation of suds as the spin basket 3 rotates.

To prevent vibration during the operation cycle, cast iron counterweights 6a,6b each of predetermined weight, are attached to the front and upper cylindrical surface of the tub 2 by bolts 7. The front counterweight 6a is generally in the region of 11.4kg and the upper counterweight 6b is generally in the region of 12.2kg.

A particular disadvantage with the balancing device described above is that rather than prevent the vibration as a result of the uneven distribution of laundry in the washing machine, it simply dampens the vibration, and thus has inferior balancing characteristics. Furthermore, the conventional balancing device dampens the vibration transmitted to the tub 2 rather than the vibration of the spin basket itself and so is incapable of controlling the imbalance as soon as it occurs. This can cause noise and damage to the components of the washing machine.

It is an aim of the present invention to overcome or substantially alleviate the aforementioned problems.

A method of manufacturing a balancing device according to the invention is characterised by the step of smoothing the inner surface to reduce the roughness thereof.

In the preferred embodiment, the method includes the steps of providing an inner and an outer annular channel and smoothing each channel by a different amount.

Preferably, the method includes the step of smoothing the inner channel such that its smoothness is between the range 1.5S and 6S and the smoothness of the outer channel is 12S.

The method preferably includes the step of providing an inner and outer channel on each end panel of the drum.

Preferably, the method includes the step of filling each channel with a liquid of a given viscosity, which may be different for the liquid in each channel.

A washing machine according to the present invention is characterised in that the inner and outer channels contain liquids of different viscosities.

Conveniently, the liquid in the inner channel has a viscosity of 100 +/- 200cst and the liquid in the outer channel preferably has a viscosity of 160 +/- 20cst.

The counterbalance means may advantageously be a plurality of balls, preferably having a diameter of 12.7 +/- 0.5mm in the inner channel and 15.875 +/- 0.5mm in the outer channel.

Preferably, the roughness of the inner surface of each channel is 10 +/- 0.5S.

In the following description, the element referred to as the "spin basket" is an example of a "drum" as mentioned in the claims.

The meaning of the expression "washing machine" should be taken to include spin dryers, tumble dryers and the like.

Embodiments of the invention will now be described, by way of example only, with reference to the accompanying drawings, in which:
Figure 1 is a sectional view of a drum washing machine with a balancing device in accordance with an embodiment of the present invention;
Figure 2 is an enlarged view of a part of the balancing device of Figure 1; and
Figure 3 is a perspective view of the overall construction of a conventional drum washing machine.

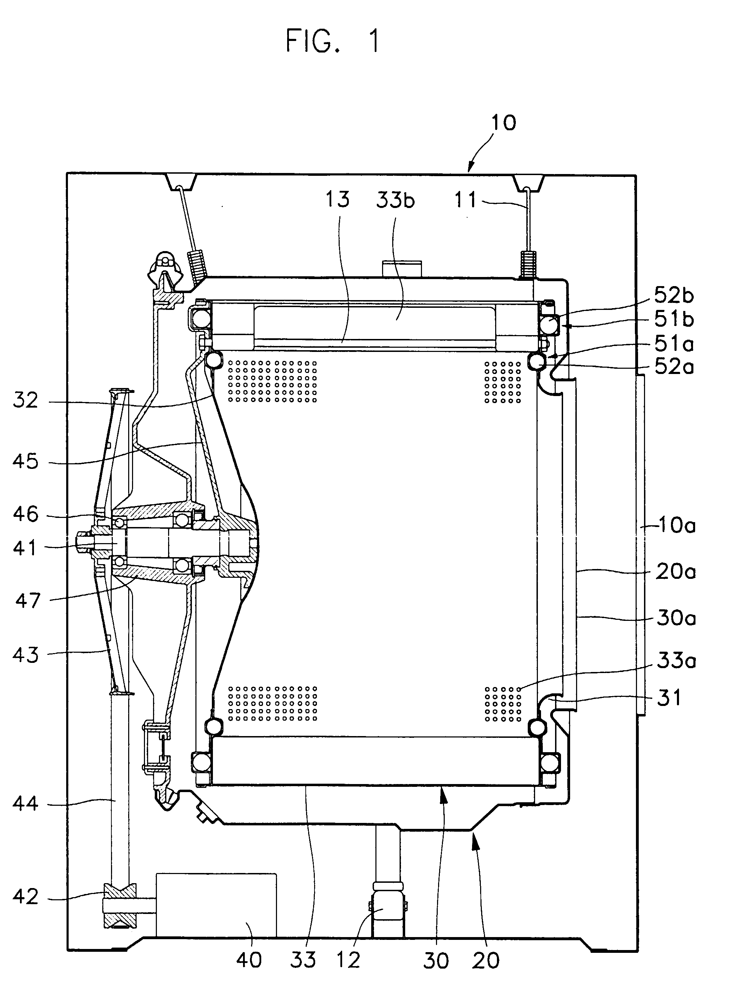

As shown in Figure 1, the drum washing machine of the preferred embodiment includes a housing 10 having a tub 20 suspended therein, a spin basket 30 mounted for rotation within the tub 20 by an electric motor installed in the housing beneath the tub 20. The tub 20 is suspended by four springs 11 arranged on four sides of the housing 10, and a pair of shock absorbing members 12 are provided under the tub 20.

The tub 20 and spin basket 30 are mounted so that the axis of rotation of the spin basket is parallel to the ground and corresponding openings 10a, 20a and 30a are formed in the front of the housing 10, the front of the tub 20 and the front of the spin basket 30 so that laundry can be placed in or removed from the spin basket 30 through the tub 20 and housing 10.

The spin basket 30 has front and rear panels 31 and 32 separated by a cylindrically shaped side panel 33. Three radially inwardly extending lifters 33b, spaced 120° from each other, are formed in the side panel 33 in the form of a "V" and agitate the laundry during washing. A plurality of holes 33a are uniformly distributed in the side panel 33, which allow water to flow freely between the tub 20 and the spin basket 30, and provide a path through which water removed from laundry during the spin drying cycle can drain into the tub 20.

The spin basket 30 is driven by the electric motor 40 by way of a shaft 41 which extends from the spin basket through the tub 20. A first pulley 42 is connected to the electric motor 40, and a second pulley 43 is connected to the shaft 41. A belt 44 is placed between the first and second pulleys 42 and 43, and a flange 45 is provided in the rear panel 32 connected with the shaft 41 to provide room for a pair of bearings 46, installed in a bearing housing 47, are installed between the shaft 41 and the tub 20 so as to support the shaft 41.

The spin basket 30 has a pair of balancing devices provided on both the front and rear panels 31 and 32 to counteract the vibration and imbalance created during rotation due to uneven distribution of laundry in the spin basket. The balancing devices comprise annular races 51a and 51b concentrically formed on inner and outer sides of the front and rear panels 31 and 32, and a plurality of balls 52a and 52b (which serve as counterweights) are seated in the races 51a and 51b. The inner race 51a and the outer race 51b protrude inwardly and outwardly respectively. The inner race 51a and the outer race 51b are welded to each other to form a seal. The races 51a and 51b contain a predetermined amount of liquid to allow the balls 51a and 51b to move freely.

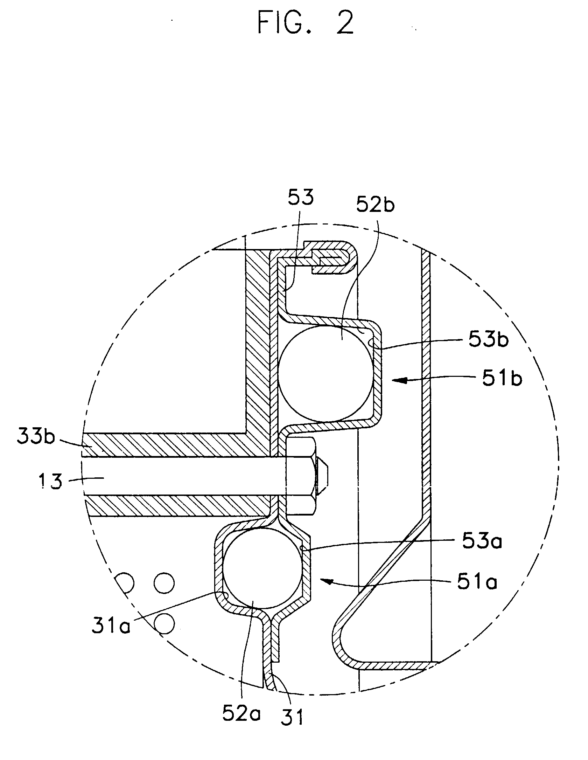

As shown in Figure 2, the races 51a and 51b are formed by the front panel 31 and a cover 53 joined thereto. The outer race 51b is formed by the combination of a flat portion of the front panel 31 and a groove 53b provided in the cover 53 whereas the inner race 51a is formed by the combination of a first groove 31a in the front panel 31 and a second groove 53a in the cover 53. The cover 53, the front panel 31, and the rear panel 32 are all fastened together by a bolt 13. Each of the races 51a and 51b is supplied with liquid through a hole 53c.

The races 51a and 51b each have four inner walls a, b, c and d, and a', b', c' and d', respectively, thus forming an annular shaped space. The balls 52a and 52b freely move in the races 51a,51b and are in contact with the inner walls a, b, c and d and a', b', c' and d' respectively. Therefore, if the inner walls a, b, c and d and a', b', c' and d' are rough, friction and abrasion occurs hindering the races' ability to reduce vibration created by the rotation of the spin basket 30 when it contains an uneven distribution of laundry. If the inner walls a, b, c and d and a', b', c' and d' are very rough, high ridges are formed on them. If the distance between two adjacent ridges is large, a large resistance is created during the movement of the balls 52a and 52b causing substantial abrasion.

Furthermore, as the contact surface of each of the balls 52a,52b and the inner walls a, b, c and d and a', b', c' and d' is very small when the high and large ridges are created, the stability of the balls 52a and 52b is adversely affected causing abnormal vibration. It is preferable that the inner walls a, b, c and d and a', b', c' and d' of the races 51a and 51b are manufactured through a normal smoothing procedure (KS B 0161 regulation: VV; maximum height Rmax equals 10S ± 0.5S). Preferably, smoothing is performed on all the inner walls a, b, c and d and a', b', c' and d', but it may be carried out on just inner walls b and b', which the balls 52a and 52b come in close contact with, in order to reduce the cost of the smoothing process.

The smooth movement of the balls 52a and 52b depends on the roughness of each of the races 51a and 51b, the diameter of the respective balls 52a and 52b and the viscosity of the liquid. If the roughness of each race or the viscosity of the liquid is too great, the initial movement and rolling of the balls 52a and 52b may be hindered. Consequently, the balancing devices would not be able to dynamically and promptly compensate for abnormal vibrations created by garments unevenly arranged in the spin basket. On the contrary, if the roughness of each race or the viscosity of the liquid is too small, the vibration caused by the movement of the balls 52a and 52b may obstruct the spin basket 30's normal operation. Therefore, the roughness of the inner walls of the races 51a and 51b must be properly regulated according to the diameter of the respective balls 52a and 52b in order to enhance the device's balancing characteristics. It is preferable that the balancing devices of the present invention offer superior balancing effects during the initial operation of the spin basket by making the diameter of the balls 52a, the viscosity of the liquid held in the race 51a, and the roughness of the race 51a different from those of the race 51b.

This will now be fully described with reference to the following table.

| | | | |
|---|---|---|---|
| Race | Diameter (mm) of Balls | Roughness (S) of Race | Viscosity (cst) of Liq. |
| Outer race | 15.785 ± 0.5 | Normal of smoothing (12) | 160 ± 20 |
| Inner race | 12.7 ± 0.5 | High level of smoothing (1.5 - 6 | 100 ± 20 |

As shown in the above table, the diameter of the balls 52b held in the outer race 51b is 15.785 ± 0.5mm, and each of the inner walls a', b', c' and d' of the outer race 51b has the roughness 12S through the normal smoothing process, and the viscosity of the liquid held in the outer race 41b is 160 ± 20cst. The ball 52a seated in the inner race 51a has a diameter of 12.7 ± 0.5mm, and each of the inner walls a, b, c and d of the inner race 51a has the roughness 1.5S - 6S through the high-level smoothing process, and the viscosity of the liquid is 100 ± 20cst. Since the balls 52b in the outer race 51b are larger than the balls 52a in the inner race 51a, the inner walls a, b, c and d of the outer race 51b are formed through the normal smoothing process and the liquid contained in the outer race 51b has a high viscosity. The inner walls a, b, c and d of the inner race 51a are formed with the high level of smoothing, and the viscosity of the liquid in the inner race 51a is small (100 ± 20cst).

The balls 52a seated in the inner races 51a have an initial driving force that is larger than that of the balls 52b in the outer race 51b during the rotation of the spin basket 30, so the balls 52a and 52b move along the inner race 51a and the outer race 51b at different speeds toward the opposite side of the imbalance, thus counteracting the imbalance promptly.

The following description concerns the operation of the balancing device manufactured according to the above method.

Garments to be washed are positioned within the spin basket 30. When the spin basket 30 is rotated at high speeds by the electric motor 40 the balls 52a and 52b move along the races 51a and 51b toward the opposite side of any imbalance by centrifugal force generated by the high-speed rotation of the spin basket 30, thereby compensating for the imbalance and preventing the vibration and eccentric rotation of the spin basket 30.

In other words, the spin basket 30 turns eccentric from its geometric centre due to the uneven distribution of laundry within the spin basket 30. The centrifugal force from the geometric centre and that of its centre of rotation simultaneously act on the balls 52a and 52b in the races 51a and 51b, so that the balls 52a and 52b reposition to oppose the imbalance. The balls 52a and 52b turn about the geometric centre of the spin basket 30, thus making the spin basket 30's centre of rotation meet the geometric centre. In this manner, the unbalanced state of the spin basket 30 is dynamically countered to eliminate the resultant vibrations and noise.

The following description relates to the movement of the balls 52a and 52b.

While the spin basket 30 is rotating, the balls 52a and 52b respectively seated in the inner and outer races 51a and 51b move to the opposite side of the imbalance created by the uneven arrangement of the laundry at different speeds, thereby dynamically compensating for the imbalance. The balls 52a in the inner races 51a move faster than the balls 52b in the outer races 51b because of the high level of smoothing on the inner walls a, b, c and d of the inner race 51a and the lower viscosity liquid in the inner races 51a. Since the balls 52a and 52b move in the respective outer races 51a and 51b at different speeds, they can more effectively eliminate the abnormal vibration of the spin basket 30.

The roughness of the respective races 51a and 51b is inversely related to the diameter of each of the balls 52a and 52b seated in the inner race 51a and outer race 51b during the normal operation of the spin basket 30, so the balls 52a and 52b do not vibrate abnormally, avoiding damage to the normal operation of the spin basket 30.

As described above, the balancing device of the present invention may dynamically counteract an imbalance, created by the uneven distribution of laundry in the washing machine's spin basket during rotation to thereby preclude noise and vibration due to the abnormal rotation of the spin basket.

The balls dynamically counteract the vibration of the spin basket more promptly by moving the inner and outer races at different speeds. In addition, the smoothness of inner walls of the races is varied depending on the diameters of the balls held therein, thereby preventing the spin basket from vibrating abnormally because of the vibration of the balls.

## Claims

1. A method of manufacturing a balancing device for a rotatably mounted drum (30) of a washing machine, including the steps of providing an annular channel (51a,51b) fixed relative to the drum (30) concentric therewith, and placing a plurality of freely movable counterweights (52a,52b) in contact with an inner surface of the channel (51a,51b) **characterised by** the step of smoothing the inner surface to reduce the roughness thereof.

2. A method according to claim 1 including the steps of providing an inner and an outer annular channel (51a,51b) and smoothing each channel (51a,51b) by a different amount.

3. A method according to claim 2 including the step of smoothing the inner channel (51a) such that its smoothness is in the range 1.5S and 6S.

4. A method according to claim 2 or 3, including the step of smoothing the outer channel (51b) such that its smoothness is 12S.

5. A method according to any of claims 2 to 4 wherein the drum (30) includes two end panels (31,32) and the method includes the step of providing an inner and outer channel (51a,51b) on each end panel (31,32).

6. A method according to any one of claims 2 to 5 including the step of filling each channel (51a,51b) with a liquid.

7. A method according to claim 6 including the step of filling each channel (51a,51b) with liquids having respective different viscosities.

8. A washing machine including a rotatably mounted drum (30) for receiving a load of laundry and counterbalance means (52a,52b) arranged to move, during rotation of the drum (30) in an inner and outer annular channel (51a,51b) fixed relative to the drum (30) concentric therewith, towards a counterbalancing position in response to an imbalance in a load in the drum (30), **characterised in that** the inner and outer channels (51a,51b) contain liquids of different viscosities.

9. A washing machine according to claim 8 wherein the liquid in the inner channel (51a) has a viscosity of 100 +/- 20cst.

10. A washing machine according to claim 8 or 9 wherein the liquid in the outer channel (51b) has a viscosity of 160 +/- 20cst.

11. A washing machine according to any of claims 8 to 10 wherein the counterbalance means (52a,52b) is a plurality of balls.

12. A washing machine according to claim 11 wherein the diameter of the balls in the inner channel (51a) is 12.7 +/- 0.5mm.

13. A washing machine according to claim 11 or 12 wherein the diameter of the balls in the outer channel (51b) is 15.875 +/- 0.5mm.

14. A washing machine according to any of claims 8 to 13 wherein the roughness of the inner surface of each channel (51a,51b) is 10 +/- 0.5S.

15. A balancing device for a drum washing machine comprising:
a tub suspended in the drum washing machine's housing;
a drum-type spin basket rotatably installed in the tub; and
at least two races provided to the spin basket concentric with the spin basket, and containing liquid and a plurality of balls;
wherein a high level of smoothing of 1.5S to 6S is carried out on the race positioned inside the spin basket, the liquid held in said inner race is 100 ± 20cst in viscosity, and the diameter of the ball in said inner race is 12.7 ± 0.5mm, while an intermediate level of smoothing of 12S is performed on the race positioned outside the spin basket, the liquid held in said outer race is 160 ± 20cst in viscosity, and the diameter of the ball in said outer race is 15.875 ± 0.5mm.

16. A balancing device for a drum washing machine comprising:
a drum-type spin basket;
races provided to the spin basket concentric with the spin basket, and each having inner walls on which a smoothing is performed; and
a plurality of balls seated in the respective races to freely move along the races.

17. A balancing device as set forth in claim 16 wherein the roughness of the inner walls of each race is 10 ± 0.5S.
